# EUROPÄISCHE PATENTSCHRIFT

(11) **EP 0 878 972 B1**
(45) Veröffentlichungstag und Bekanntmachung des Hinweises auf die Patenterteilung: **02.01.2004**
(21) Anmeldenummer: 98440089.5
(22) Anmeldetag: 07.05.1998
(51) Int. Cl.: H04Q 3/00, H04Q 3/62

(54) **Teilnehmeranschlussnetz, Vermittlungsstelle, Dienststeuereinrichtung und Verbindungsaufbauverfahren**
Subscriber network, switching point, service control point and method for establishing a connection
Réseau de raccordement d'abonnés, central de commutation, dispositif de commande de service et procédé d'établissemnt des communications

(30) Priorität: 14.05.1997 DE 19720086
(43) Veröffentlichungstag der Anmeldung: 18.11.1998
(73) Patentinhaber: ALCATEL, 75008 Paris (FR)
(72) Erfinder: Weik, Hartmut, 70195 Stuttgart (DE); Lautenschlager, Wolfgang, 71287 Weissach-Flacht (DE)
(74) Vertreter: Rausch, Gabriele, Dr.

(56) Entgegenhaltungen:
- EP-A- 0 641 134
- WO-A-96/21323
- GB-A- 2 297 882
- US-A- 5 553 130
- ATOUI M: "VIRTUAL PRIVATE NETWORK CALL PROCESSING IN THE INTELLIGENT NETWORK" DISCOVERING A NEW WORLD OF COMMUNICATIONS, CHICAGO, JUNE 14 - 18, 1992, Bd. 2, 14. Juni 1992, Seiten 561-565, XP000326744 INSTITUTE OF ELECTRICAL AND ELECTRONICS ENGINEERS

## Beschreibung

Die Erfindung betrifft ein Teilnehmeranschlußnetz zum Anschluß von Endgeräten, die über das Teilnehmeranschlußnetz jeweils mittels einer ihnen zugeordneten öffentlichen Rufnummer eines ersten, öffentlichen Nummerierungsbereichs erreichbar sind, nach dem Oberbegriff von Anspruch 1, eine Vermittlungsstelle für ein Teilnehmeranschlußnetz nach dem Oberbegriff von Anspruch 9, eine Dienststeuereinrichtung für ein Teilnehmeranschlußnetz nach dem Oberbegriff von Anspruch 10 sowie ein Verfahren zum Aufbau einer Verbindung zu einem Endgerät eines Teilnehmeranschlußnetzes nach dem Oberbegriff von Anspruch 11.

Ein aus mehreren Vermittlungsknoten bestehendes Teilnehmeranschlußnetz wird üblicherweise aus mehreren Teilnehmervermittlungsstellen und gegebenenfalls Transitvermittlungsstellen aufgebaut, die über ein Nr. 7 Signalisierungssystem miteinander verbunden sind. Jedem an das Teilnehmeranschlußnetz angeschlossenen Endgeräte ist hierbei eine öffentliche Rufnummer des Nummerierungsbereiches zugeordnet, in dem sich das Teilnehmeranschlußnetz befindet.

Eine Leitweglenkung für ein öffentliches Netz mit Hilfe eines Dienstkontrollpunkts ist in GB 2 297 882 beschrieben.

Die Erfindung geht nun von einer Leitweglenkung für ein solches Teilnehmeranschlußnetz aus, wie sie in US 5,375,167 beschrieben ist.

Das Teilnehmeranschlußnetz ist aus mehreren Teilnehmervermittlungsstellen und ein oder mehreren übergeordneten Transitvermittlungsstellen aufgebaut. Jeder Teilnehmervermittlungsstelle ist mindestens ein Nummerierungsblock innerhalb des Nummerierungsbereiches des Teilnehmeranschlußnetzes zugeordnet. Die Vergabe der Nummerierungsblöcke wird hierbei von der übergeordneten Transitvermittlungsstelle verwaltet. Nummerierungsblöcke werden bei Bedarf von einer der untergeordneten Vermittlungsstellen angefordert und von der übergeordneten Vermittlungsstelle zugeordnet. Durch die Anpassung der Wegeleittabellen der Teilnehmervermittlungsstellen ist hierbei weiter möglich, die Zuteilung der öffentlichen Rufnummern zu Teilnehmeranschlüssen innerhalb der einer Teilnehmervermittlungsstelle zugeordneten Nummerierungsblöcke beliebig zu gestalten.

Beim Verbindungsaufbau wird die in einer Verbindungsanforderung eingetragene gerufene öffentliche Rufnummer wie üblich sukzessiv ausgewertet: Der vordere Teil der Rufnummer adressiert einen Nummernblock, und damit eine der untergeordneten Vermittlungsstellen. Er wird von der übergeordneten Vermittlungsstelle ausgewertet. Der hintere Teil der Rufnummer adressiert einen Teilnehmer innerhalb des internen Nummerierungsbereiches einer Teilnehmervermittlungsstelle und wird von dieser ausgewertet.

Ein Nachteil eines so aufgebauten Teilnehmeranschlußnetz besteht darin, daß der dafür erforderliche technische Aufwand recht hoch ist: Es werden mehrere Teilnehmervermittlungsstellen und mindestens eine Transitvermittlungsstelle benötigt.

Dieser Aufwand ist vor allem für einen Betreiber eines kleineren Teilnehmeranschlußnetzes, der sich einen (geographischen) Nummerierungsbereich mit anderen Betreibern und deren Teilnehmeranschlußnetzen teilt, unverhältnismäßig hoch.

Ein weiterer Nachteil besteht für einen solchen Betreiber darin, daß sich mit dieser Architektur eine Rufnummernportabilität zwischen Teilnehmeranschlußnetzen, die sich denselben Nummerierungsbereich teilen, nur schwer realisieren läßt.

Der Erfindung liegt nun die Aufgabe zugrunde, ein kostengünstigeres Konzept für den Aufbau von Verbindungen zu Teilnehmern eines Teilnehmeranschlußnetzes anzugeben.

Diese Aufgabe wird gelöst durch ein Teilnehmeranschlußnetz nach der Lehre von Anspruch 1, eine Vermittlungsstelle nach der Lehre von Anspruch 9, eine Dienststeuereinrichtung nach der Lehre von Anspruch 10 und ein Verbindungsaufbauverfahren nach der Lehre von Anspruch 11.

Der Erfindung liegt der Gedanke zugrunde, den Nummerierungsraum innerhalb eines Teilnehmeranschlußnetzes aufzuweiten und damit den Einsatz von Nebenstellenvermittlungen als Teilnehmeranschlußvermittlungsstellen zu ermöglichen. Die gerufene öffentliche Rufnummer in einer Verbindungsanforderung wird hierbei auf eine virtuelle Rufnummer gemäß diesem erweiterten internen Nummerierungsraum abgebildet. Die virtuelle Rufnummer enthält zusätzlich eine Kennung für die Ziel-Nebenstellenvermittlung und besitzt somit neben der Adressierung des Endgerätes innerhalb des Nummerierungsbereiches durch die öffentliche Rufnummer zusätzlich eine parallele, unabhängige Adressierung der Ziel-Nebenstellenvermittlung.

Durch die Erfindung wird es möglich, Teilnehmeranschlußnetze hauptsächlich aus Nebenstellenvermittlungen aufzubauen, die um ein vielfaches kostengünstiger sind. Solche Nebenstellenvermittlungen müssen hierbei auch nicht aufwendige Signalisierungsprotokolle der öffentlichen Vermittlungstechnik, wie beispielsweise das Signalisierungssystem Nr. 7, unterstützen.

Weitere Vorteile ergeben sich, wenn bereits vorhandene Nebenstellenvermittlungen oder Netze aus Nebenstellenvermittlungen (Nebenstellen-Cluster) für den Aufbau des Teilnehmeranschlußnetzes verwendet werden können. Dies ist vor allem für neu auftretende Teilnehmeranschlußnetzbetreiber, wie Stadtnetzbetreiber, von Vorteil.

Die Erfindung hat den weiteren Vorteil, daß der volle öffentliche Nummerierungsbereich in jeder Nebenstellenanlage zur Verfügung steht. Damit kann jedem Endgerät einer Nebenstellenvermittlung jede beliebige Rufnummer des öffentlichen Nummerierungsbereichs zugeordnet werden. Eine Lösung gemäß der Erfindung eignet sich somit besonders für Teilnehmeranschlußnetze in einem Nummerierungsbereich, den sich Teilnehmeranschlußnetze mehrerer Netzbetreiber teilen und in dem Rufnummernportabilität zwischen diesen Teilnehmeranschlußnetzen gefordert ist. Diese Forderung besteht in einer Vielzahl deregulierter Netzumgebungen.

Ein weiterer Vorteil ergibt sich für einen Netzbetreiber dadurch, daß in den meisten Nebenstellenanlagen eine Vielzahl von Leistungsmerkmalen zur Verfügung stehen. Diese Leistungsmerkmale können den Teilnehmern ohne zusätzlichen Aufwand für den Netzbetreiber zur Verfügung gestellt werden.

Erfindungsgemäße Ausgestaltungen der Erfindung sind den Unteransprüchen zu entnehmen.

Es ist hierbei insbesondere vorteilhaft, die virtuelle Rufnummer des rufenden Teilnehmers in einer Verbindungsanforderung wieder in eine öffentliche Rufnummer umzubilden. Damit wird der erweiterte Rufnummernraum auch vollkommen transparent für abgehende Rufe.

Im Folgenden wird die Erfindung anhand zweier Ausführungsbeispiele unter Zuhilfenahme beiliegender Zeichnungen beispielhaft erläutert.
- Fig. 1: zeigt ein Blockschaltbild eines Ausschnittes aus einem Kommunikationssystem mit einem erfindungsgemäßen Teilnehmeranschlußnetz.
- Fig. 2: zeigt ein Blockschaltbild einer erfindungsgemäßen Dienststeuereinrichtung und einer Dienstvermittlungsstelle für das Teilnehmeranschlußnetz nach Fig. 1.

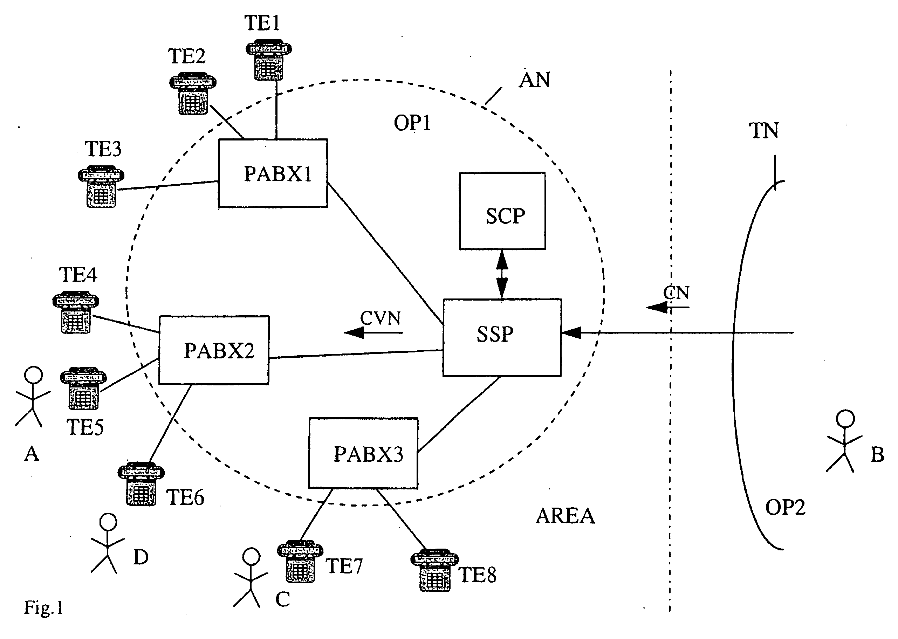

Im ersten Ausführungsbeispiel wird der Aufbau eines erfindungsgemäßen Teilnehmeranschlußnetzes mittels einer erfindungsgemäßen Dienststeuereinrichtung sowie die Durchführung des erfindungsgemäßen Verbindungsaufbauverfahrens anhand von Fig. 1 beschrieben.

Fig. 1 zeigt ein Fernnetz TN eines Netzbetreibers OP2 und einen Anschlußnetzbereich AREA mit einem Teilnehmeranschlußnetz AN eines Netzbetreibers OP1.

Der Anschlußnetzbereich AREA stellt einen bestimmten geographischen Bereich, beispielsweise einen Ortsnetzbereich, dar; dem ein einheitlicher Nummerierungsbereich zugeordnet ist. Allen Endgeräten innerhalb des Anschlußnetzbereiches AREA ist eine öffentliche Rufnummer innerhalb dieses Nummerierungsbereiches zugeordnet. Teilnehmer des Anschlußnetzbereiches AREA können sich hierbei gegenseitig durch die Anwahl der entsprechenden öffentlichen Rufnummer des gerufenen Teilnehmers adressieren. Für die Anwahl eines Teilnehmers, der nicht dem Anschlußnetzbereich AREA zugeordnet ist, ist der öffentlichen Rufnummer des gerufenen Teilnehmers eine Kennzahl voranzustellen, die aus einer Ortsnetzkennzahl oder einer Landeskennzahl und einer Ortsnetzkennzahl besteht.

Im Anschlußnetzbereich AREA sind mehrere Teilnehmeranschlußnetzbetreiber mit mehreren Teilnehmeranschlußnetzen angesiedelt, von denen in Fig. 1 nur das Teilnehmeranschlußnetz AN des Netzbetreibers OP1 gezeigt ist. All diese Teilnehmeranschlußnetze teilen sich hierbei den Nummerierungsbereich des Anschlußnetzbereiches AREA. Es ist bei der Anwahl eines Teilnehmers des Anschlußnetzbereiches AREA somit unerheblich, welchem der Teilnehmeranschlußnetze er zugeordnet ist.

Jedes der Teilnehmeranschlußnetze ist mit dem Fernnetz TN und vorteilhafterweise auch mit den anderen Teilnehmeranschlußnetzen über Nr. 7 Verbindungsleitungen verbunden.

Es ist auch möglich, daß im Anschlußnetzbereich AREA nur ein Teilnehmeranschlußnetz, das Teilnehmeranschlußnetz AN, angesiedelt ist.

Das Fernnetz TN besteht aus mehreren miteinander vermaschten Transitvermittlungsstellen. Es dient dem Aufbau von Verbindungen zwischen Teilnehmeranschlußnetzen verschiedener Anschlußnetzbereiche und wird somit für Fernverbindungen genutzt.

Es ist auch möglich, daß Verbindungen zwischen Endgeräten verschiedener Teilnehmeranschlußnetze des Anschlußnetzbereiches AREA über eine Vermittlungsstelle des Fernnetze TN vermittelt werden. Weiter ist es möglich, daß parallel verschiedene Fernnetze verschiedener Fernnetzbetreiber zur Verfügung stehen und das zu verwendende Fernnetz frei vom rufenden Teilnehmer ausgewählt werden kann.

Das Teilnehmeranschlußnetz AN weist eine Dienstvermittlungsstelle SSP, eine Dienststeuereinrichtung SCP und drei Nebenstellenvermittlungen PABX1 bis PABX3 auf. Die Nebenstellenvermittlungen PABX1 bis PABX3 sind beispielhaft mit Endgeräten TE1 bis TE3, TE4 bis TE6 bzw. TE7 und TE8 verbunden.

Die Nebenstellenvermittlungen PABX1 und PABX2 sind miteinander zu einem Nebestellen-Cluster mit einem einheitlichen Rufnummernschema und einem gemeinsamen privaten Nummerierungsbereich über eine Querleitung verbunden. Die Verkopplung der Nebenstellenvermittlungen PABX1 und PABX2 erfolgt hierbei über eine systemspezifische, proprietäre Schnittstelle. Ein solches Nebenstellen-Cluster hat den Vorteil, daß sämtliche nebenstellenspezifischen Leistungsmerkmale im gesamten Nebenstellen-Cluster zur Verfügung stehen.

Es ist auch möglich, daß die Nebenstellenvermittlungen in solche einem Nebenstellen-Cluster getrennt private Nummerierungsbereiche besitzen.

Die Endgeräte TE1 bis TE8 sind übliche Endgeräte für ein Telekommunikationsnetz wie Telefone, Faxgeräte, aber auch Computeranlagen mit entsprechenden Schnittstellenkarten, die eine Datenkommunikation erlaubt. Die Endgeräte TE1 bis TE8 sind hierbei über eine ISDN-Schnittstelle (ISDN = Integrated Services Digital Network) mit den Nebenstellenvermittlungen PABX1 bis PABX3 verbunden. Es ist auch möglich, einen analogen Teilnehmeranschluß für Endgeräte an den Nebenstellenvermittlungen PABX1 bis PABX3 vorzusehen.

Die Nebenstellenvermittlungen PABX1 bis PABX3 sind übliche Vermittlungen für Nebenstellenanlagen, beispielsweise Nebenstellenvermittlungen A4400 der Alcatel SEL AG 820). Die Nebenstellenvermittlungen sind jeweils über eine DSS1 Schnittstelle mit der Dienstvermittlungsstelle SSP verbunden.

Es ist auch möglich, daß die Nebenstellenvermittlungen PABX1 bis PABX3 über eine Schnittstelle gemäß des QSIG Standards oder über eine systemspezifische Schnittstelle (beispielsweise die Schnittstelle ABCF der Alcatel SEL AG) mit der Dienstvermittlungsstelle SSP verbunden sind.

In den Wegeleittabellen der Nebenstellenvermittlungen PABX1 bis PABX3 sind jeweils die öffentlichen Rufnummern der an die jeweilige Nebenstellenvermittlung angeschlossenen Endgeräte als Nebenstellenrufnummer des jeweiligen Endgerätes eingetragen. Der interne, private Nummerierungsraum einer jeden der Nebenstellenvermittlungen PABX1 bis PABX3 entspricht somit von seiner Größe dem des Nummerierungsbereichs des Anschlußnetzbereichs AREA. Es kann somit im internen Rufnummernplan einem Teilnehmeranschluß beispielsweise der Nebenstellenvermittlung PABX1 jede beliebige öffentliche Rufnummer des Anschlußnetzbereiches AREA zugeordnet werden.

Es ist auch möglich, daß es sich bei einer oder bei jeder der Nebenstellenvermittlungen PABX1 bis PABX3 um eine Funknebenstellenvermittlung, beispielsweise nach dem DECT Standard handelt.

Bei der Dienstvermittlungsstelle SSP handelt es sich um eine Vermittlungsstelle nach der öffentlichen Vermittlungstechnik, die über das Nr. 7 Signalisierungssystem mit einer Transitvermittlungsstelle des Fernnetzes TN und mit Vermittlungsstellen der übrigen Teilnehmeranschlußnetze des Anschlußnetzbereiches AREA verbunden ist. Die Nebenstellenvermittlungen PABX1 bis PABX3 sind mit der Dienstvermittlungstelle SSP verbunden und die Dienstvermittlungsstelle SSP ist für die Vermittlung sämtlichen Verkehrs zwischen den Nebenstellenvermittlungen PABX1 bis PABX3 sowie des externen Verkehrs der Nebenstellenvermittlungen PABX1 bis PABX3 zuständig.

Wenn eine Verbindungsanforderung mit einer in diese Verbindungsanforderung eingetragenen gerufenen öffentlichen Rufnummer CN an der Dienstvermittlungsstelle SSP ankommt, richtet diese eine Anfrage mit der Rufnummer CN an die Dienststeuereinrichtung SCP. Als Antwort auf diese Anfrage empfängt sie sodann von der Dienststeuereinrichtung SCP eine virtuelle Rufnummer CVN. Die Rufnummer CVN trägt sie sodann anstelle der Rufnummer CN in die Verbindungsanforderung ein und vermittelt die Verbindungsanforderung entsprechend dieser neuen gerufenen Rufnummer CVN weiter.

Die Kommunikation zwischen der Dienstvermittlungsstelle SSP und der Dienststeuereinrichtung SCP erfolgt vorteilhafterweise gemäß der IN Architektur (IN = Intelligent Network). Die Dienststeuereinrichtung SCP und die Dienstvermittlungsstelle SSP enthalten beispielsweise eine Diensteuer- bzw. Dienstvermittlungs-Funktionalität (service control function, service switching function) gemäß ITU-T Q.1214.

Endgerät können nicht nur an die Nebenstellenvermittlungen PABX1 bis PABX3, sondern auch an die Dienstvermittlungsstelle SSP angeschließen. Verbindungsanforderungen, die an ein solches Endgerät gerichtet sind, werden von der Dienstvermittlungsstelle SSP erkannt und ohne Anfrage an die Dienststeuereinrichtung SCP weitervermittelt. Es ist aber auch möglich, auch bei solchen Verbindungsanforderungen eine Anfrage an die Dienststeuereinrichtung SCP durchzuführen, die dann als virtuelle Rufnummer CVN die Rufnummer CN zurückgibt.

Die Dienststeuereinrichtung SCP ermittelt aus der öffentlichen Rufnummer CN, die ihr von der Dienstvermittlungsstelle SSP gesendet wird, die virtuelle Rufnummer CVN. Hierzu bestimmt sie diejenige der Nebenstellenvermittlungen PABX1 bis PABX3, in deren internen Rufnummernplan die Rufnummer CN als Nebenstellenrufnummer eingetragen ist und an der somit das gerufene Endgerät angeschlossen ist. Anschließend bildet sie aus der Rufnummer CN und einer der bestimmten Nebenstellenvermittlung entsprechenden Kennung die Rufnummer CVN und sendet sie an die Dienstvermittlungsstelle SSP zurück.

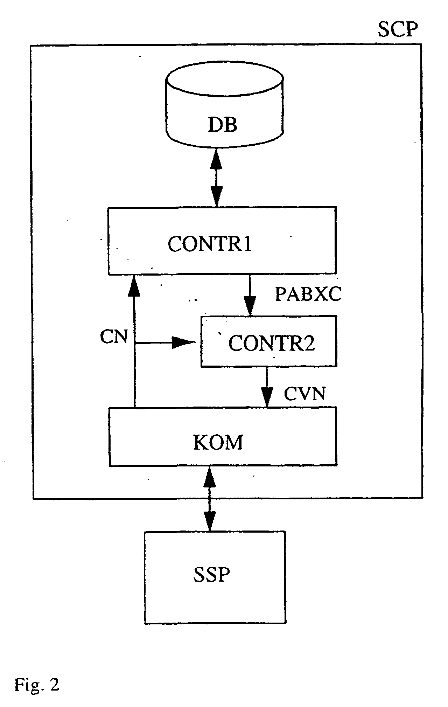

Anhand von Fig. 2 wird nun der Aufbau der Dienststeuereinrichtung SCP detaillierter erläutert.

Fig. 2 zeigt die Dienststeuereinrichtung SCP und die Dienstvermittlungsstelle SSP.

Die Dienststeuereinrichtung SCP besteht aus einer Datenverarbeitungsplattform mit peripheren Komponenten, die eine Kommunikation mit der Dienstvermittlungsstelle SSP über das Nr. 7 Signalisierungssystem ermöglichen. Es können auch beliebige andere Kommunikationsdienste für die Kommunikation zwischen der Dienststeuereinrichtung SCP und der Dienstvermittlungsstelle SSP verwendet werden, beispielsweise ein LAN (Local Area Network) oder eine ATM (Asynchronous Transfer Mode) Verbindung. Auf der Datenverarbeitungsplattform laufen Steuerprogramme ab, die eine Datenbank DB, zwei Steuerfunktionen CONTR1 und CONTR2 und eine Kommuniktationsfunktion KOM realisieren.

Die Kommunikationsfunktion KOM führt die für den Austausch von Daten und Steuerbefehlen notwendigen Kommunikationsmechanismen durch. Sie steuert u. a. den Empfang der Rufnummer CN, das Einsetzen der Rufnummer CVN in die wartende Verbindungsanforderung und das Weiterleiten dieser Verbindungsanforderung durch die Dienstvermittlungsstelle SSP. Für das Durchführen dieser Funktionen führt sie beispielsweise INAP-Operationen (INAP =Intelligent Network Application Protocoll) auf der Dienstvermittlungsstelle SSP durch.

In der Datenbank DB ist in Tabellenform abgespeichert, welche öffentliche Rufnummer CN welcher der Nebenstellenvermittlungen PABX1 bis PABX3 zugeordnet ist.

Es ist möglich als Datenbank DB eine Datenbank zu verwenden, die der Gewährleistung der Rufnummernportabilität für den Anschlußnetzbereich AREA oder für einen übergeordneten Netzbereich dient. In einer solchen Datenbank wäre für sämtliche Endgeräte des Anschlußnetzbereiches AREA oder weiterer Anschlußnetzbereiche vermerkt, an welche der Vermittlungsstellen sie angeschlossen sind oder welcher der Teilnehmeranschlußnetze das Endgerät zugeordnet ist. Auf eine solche globale Datenbank hätten dann vorteilhafter Weise mehrere Dienststeuereinrichtungen Zugriff, um Rufnummernportabilität für den gesamten Anschlußnetzbereich AREA oder für übergeordneten Netzbereiche zu ermöglichen. Die Datenbank DB wäre in diesem Fall dann vorteilhafer Weise nicht mehr Teil der Dienststeuereinrichtung SCP.

Die Steuerfunktion CONTR1 weist einen Suchalgorithmus auf, der mittels Zugriff auf die Datenbank DB zu der Rufnummer CN eine Nebenstellenvermittlung PABXC ermittelt, in deren Rufnummernplan die Rufnummer CN als Nebenstellenrufnummer eines Endgerätes eingetragen ist.

Jeder der Nebenstellenvermittlungen PABX1 bis PABX3 ist eine interne Nebenstellenkennung zugeordnet, beispielsweise die Kennung 11, 12 bzw. 13.

Die Steuerfunktion CONTR2 ermittelt diese Kennung und bildet die virtuelle Rufnummer CVN, indem sie die Kennung der Rufnummer CN voranstellt. Anschließend steuert sie das Eintragen diese virtuellen Rufnummer als rufende Rufnummer in die Verbindungsanforderung. Die Rufnummer CN wird in der Verbindungsanforderung somit durch die Rufnummer CVN ersetzt.

Es ist auch möglich, daß die Steuerfunktion CONTR2 nur die Nebenstellenkennung an die Dienstvermittlungsstelle SSP zurückzumelden, die diese dann selbständig vor der öffentlichen Rufnummer CN in die Verbindungsanforderung einträgt und damit die virtuelle Rufnummer CVN bildet.

Es ist vorteilhaft, daß die Dienststeuereinrichtung SCP auch sämtliche weitere Funktionen ausführt, die der Gewährleistung der Rufnummernportabilität innerhalb des Anschlußnetzbereiches AREA oder eines übergeordneten Netzbereiches dienen. Damit wäre nur ein einziger Zugriff auf eine Dienststeuereinrichtung notwendig, um sowohl Rufnummernportabilität als auch die Verwendung von Nebenstellenvermittlungen zu ermöglichen.

Es ist auch möglich, daß das Teilnehmeranschlußnetz AN mehrere wie die Dienstvermittlungsstelle SSP ausgestalteten Dienstvermittlungsstellen umfaßt. Es ist vorteilhaft, wenn dann all diese Dienstvermittlungsstellen auf die dann zentrale Dienststeuereinrichtung SCP zugreifen. Es ist weiter möglich, daß das Teilnehmeranschlußnetz AN noch weitere Vermittlungsstellen enthält und eine Verbindung zwischen der Dienstvermittlungsstelle SSP und eine der Nebenstellenvermittlungen PABX1 bis PABX3 über diese Vermittlungsstellen aufgebaut wird.

Weiter ist es auch möglich, daß die Dienststeuereinrichtung SCP nicht Teil des Teilnehmeranschlußnetzes AN ist, sondern einen zentralen Dienst darstellt, der mehreren Teilnehmeranschlußnetzen des Anschlußnetzbereiches AN zur Verfügung steht.

Im Folgenden werden verschiedene Möglichkeiten des Verbindungsaufbaus zu einem Teilnehmer A, der dem Endgerät TE5 zugeordnet ist, anhand von Fig. 1 erläutert.

Fig. 1 zeigt Teilnehmer A, D und C, die dem Endgerät TE5, TE6 bzw. TE7 zugeordnet sind, sowie einen externen Teilnehmer B, dessen Endgerät an ein anderes Teilnehmeranschlußnetz angeschlossen ist.

Wenn der Verbindungsaufbau von dem externen Teilnehmer B angefordert wird, wird die entsprechende Verbindungsanforderung wie üblich sukzessive ausgewertet und schließlich zur Dienstvermittlungsstelle SSP geleitet. Die Dienstvermittlungsstelle SSP entnimmt der Verbindungsanforderung die öffentliche gerufene Rufnummer CN, die die Rufnummer innerhalb des Nummerierungsbereiches des Anschlußnetzbereiches AN darstellt, und ersetzt sie durch die virtuelle Rufnummer CVN. Diese Rufnummer wird sodann innerhalb des Teilnehmeranschlußnetzes AN wie üblich weiter sukzessive ausgewertet. Die Dienstvermittlungsstelle SSP (und gegebenenfalls weitere Vermittlungsstellen) wertet die Nebenstellenkennung, die am Anfang der virtuellen Rufnummer CVN steht, aus und leitet die Verbindungsanforderungen gemäß der hierfür in ihre Wegeleittabelle stehenden Anweisungen an die Nebenstellenvermittlung PABX2 weiter.

Die Nebenstellenvermittlung PABX2 wertet wie üblich den Teil der Rufnummer CVN aus, der hinter der Nebenstellenkennung steht. Dieser Teil entspricht der Rufnummer CN. Die Rufnummer CN ist im internen Nummerierungsbereich der Nebenstellenvermittlung PABX2 dem Endgerät TE5 zugeordnet. Die Nebenstellenvermittlung ruft somit das Endgerät TE5 und veranlaßt, wenn der Teilnehmer A abhebt, wie üblich den Aufbau der Verbindung zwischen den Teilnehmern B und A.

Im umgekehrten Fall, also dem Aufbau einer Verbindung vom Teilnehmer A zum Teilnehmer B, ist es vorteilhaft, wenn die Dienstvermittlungsstelle SSP die virtuelle Rufnummer des rufenden Endgerätes TE5 durch dessen öffentliche Rufnummer im entsprechenden Parameterfeld der Verbindungsanforderung ersetzt. Hierzu hat die Dienstvermittlungsstelle SSP lediglich die Nebenstellenkennung aus der rufenden virtuellen Rufnummer zu entfernen. Durch diese Vorgehensweise wird die interne Aufweitung des Nummerierungsraumes vollkommen transparent.

Der Verbindungsaufbau von dem Teilnehmer C, dessen Endgerätes TE7 an die andere Nebenstellenvermittlung PABX3 angeschlossen ist, zum Teilnehmer A läuft analog zu dem oben beschriebenen Verbindungsaufbau zwischen den Teilnehmern B und A ab.

Wenn der Verbindungsaufbau von einem Teilnehmer D angefordert wird, dessen Endgerät TE6 mit derselben Nebenstellenvermittlung PABX2 verbunden ist, so wird die Verbindungsanforderung vollständig von der Nebenstellenvermittlung PABX2 vermittelt. Dies ist möglich, da die öffentliche Rufnummer des Endgerätes TE5 dessen Nebenstellenrufnummer entspricht.

Genau derselbe Verbindungsaufbau ergibt sich für eine Verbindung zwischen zwei Teilnehmer desselben Nebenstellen-Clusters, beispielsweise einer Verbindung zwischen Teilnehmern der Nebenstellenvermittlungen PABX1 und PABX2. Im Gegensatz zum obigen Fall wird die Verbindung hierbei über die Querleitung zwischen den beiden Nebenstellenvermittlungen PABX1 und PABX2 geführt.

Im zweiten Ausführungsbeispiel wird der Aufbau eines erfindungsgemäßen Teilnehmeranschlußnetzes mittels einer erfindungsgemäßen Vermittlungsstelle beschrieben.

Das Teilnehmeranschlußnetz ist in diesem Fall wie das Teilnehmeranschlußnetz AN nach Fig. 1 und Fig. 2 aufgebaut, mit dem Unterschied daß die von der Dienststeuereinrichtung SCP und der Dienstvermittlungsstelle SSP gebildete Vermittlungseinheit durch eine einzige Vermittlungsstelle realisiert wird. Hierfür werden die Komponenten DB, CONTR1 und CONTR2 der Dienststeuereinrichtung SCP und der Dienstvermittlungsstelle SSP in eine übliche Vermittlungsstelle integriert und in die Prozedur für die Behandlung einer Verbindungsanforderung eingebunden. Diese Vermittlungsstelle entnimmt die Rufnummer CN einer Verbindungsanforderung, ermittelt aus ihr mittels der Steuerfunktionen CONTR1, CONTR2 und der Datenbank DB die virtuelle Rufnummer CVN und leitet die Verbindungsanforderung mit der Rufnummer CVN sodann weiter.

## Patentansprüche

1. Teilnehmeranschlußnetz (AN) zum Anschluß von Endgeräten (TE1 bis TE8), die über das Teilnehmeranschlußnetz (AN) jeweils mittels einer ihnen zugeordneten öffentlichen Rufnummer eines öffentlichen Nummerierungsbereichs erreichbar sind, wobei das Teilnehmeranschlußnetz (AN) mit mehreren Vermittlungsstellen (SSP, PABX1 bis PABX3) zum Anschluß der Endgeräte (TE1 bis TE8) versehen ist,
**dadurch gekennzeichnet, daß** zwei oder mehr der Vermittlungsstellen (PABX1 bis PABX3) Nebenstellenvermittlungen mit einem jeweiligen privaten Nummerierungsbereich sind und diese Nebenstellenvermittlungen (PABX1 bis PABX3) jeweils mit ersten Mitteln versehen sind, die so ausgestaltet sind, daß sie den an die jeweilige Nebenstellenvermittlung angeschlossenen Endgeräten als Nebenstellenrufnummer im jeweiligen privaten Nummerierungsbereich jeweils ihre öffentliche Rufnummer zuordnen, daß das Teilnehmeranschlußnetz (AN) mit zweiten Mitteln (CONTR1) zur Ermittlung derjenigen der zwei oder mehr Nebenstellenvermittlungen aus einer Verbindungsanforderung mit einer gerufenen öffentlichen Rufnummer (CN) versehen ist, in deren privaten Nummerierungsbereich die gerufene öffentliche Rufnummer als Nebenstellenrufnummer einem Endgerät zugeordnet ist, und daß das Teilnehmeranschlußnetz (AN) mit dritten Mitteln (CONTR2, SSP) zum Eintragen einer virtuellen Rufnummer (CVN) mit einer der ermittelten Nebenstellenvermittlung zugeordneten Nebenstellenkennung und der gerufenen öffentlichen Rufnummer in die Verbindungsanforderung als gerufene Rufnummer versehen ist.

2. Teilnehmeranschlußnetz nach Anspruch 1, **dadurch gekennzeichnet, daß** das Teilnehmeranschlußnetz mit vierten Mitteln versehen ist, die so ausgestaltet sind, daß sie aus einer Verbindungsanforderung mit einer aus einer öffentlichen Rufnummer und einer Nebenstellenkennung gebildeten virtuellen Rufnummer als rufende Rufnummer die Nebenstellenkennung entfernen und die Verbindungsanforderung mit der öffentlichen Rufnummer als rufende Rufnummer weiterleiten.

3. Teilnehmeranschlußnetz nach Anspruch 1 oder Anspruch 2, **dadurch gekennzeichnet, daß** die zweiten bis dritten Mittel bzw. zweiten bis vierten Mittel in einer speziellen Vermittlungsstelle der Vermittlungsstellen des Teilnehmeranschlußnetzes angeordnet sind und die spezielle Vermittlungsstelle mit den zwei oder mehr Nebenstellenvermittlungen verbunden ist.

4. Teilnehmeranschlußnetz (AN) nach Anspruch 1 oder Anspruch 2,
**dadurch gekennzeichnet, daß** die zweiten Mittel (CONTR1) in einer Dienststeuereinrichtung (SCP) des Teilnehmeranschlußnetzes (AN) angeordnet sind, daß die Dienststeuereinrichtung (SCP) mit mindestens einer speziellen Dienstvermittlungsstelle (SSP) der Vermittlungsstellen des Teilnehmeranschlußnetzes verbunden ist, die mit den zwei oder mehr Nebenstellenvermittlungen (PABX1 bis PABX3) verbunden ist.

5. Teilnehmeranschlußnetz nach Anspruch 4, **dadurch gekennzeichnet, daß** die Dienststeuereinrichtung (SCP) und die mindestens eine spezielle Dienstvermittlungsstelle (SSP) so ausgestaltet sind, daß sie gemäß der IN Architektur miteinander kommunizieren.

6. Teilnehmeranschlußnetz (AN) nach einem der Ansprüche 1 bis 5,
**dadurch gekennzeichnet, daß** zwei oder mehr der Nebenstellenvermittlungen (PABX1, PABX2) miteinander verbunden sind und so ausgestaltet sind, daß sie ein Cluster von Nebenstellenvermittlungen bilden, das sich einen gemeinsamen privaten Nummerierungsbereich teilt.

7. Teilnehmeranschlußnetz (AN) nach einem der Ansprüche 1 bis 6,
**dadurch gekennzeichnet, daß** alle Verbindungen zwischen dem Teilnehmeranschlußnetz (AN) und weiteren Netzen (TN) über die spezielle Vermittlungsstelle oder die mindestens eine spezielle Dienstvermittlungsstellen (SSP) geleitet sind.

8. Teilnehmeranschlußnetz (AN) nach einem der Ansprüche 1 bis 7,
**dadurch gekennzeichnet, daß** die spezielle Vermittlungsstelle oder die mindestens eine spezielle Dienstvermittlungsstelle (SSP) über ein Nr. 7 Signalisierungssystem mit mindestens einer weiteren Vermittlungsstelle des Teilnehmeranschlußnetzes oder weiterer Netze verbunden ist und daß die zwei oder mehr Nebenstellenvermittlungen (PABX1 bis PABX3) über eine DSS1 Schnittstelle mit der speziellen Vermittlungsstelle bzw. mit der mindestens einen spezielle Dienstvermittlungsstellen (SSP) verbunden sind.

9. Vermittlungsstelle für ein Teilnehmeranschlußnetz (AN), das dem Anschluß von Endgeräten dient, die über das Teilnehmeranschlußnetz jeweils mittels einer ihnen zugeordneten öffentlichen Rufnummer eines öffentlichen Nummerierungsbereiches erreichbar sind,
**dadurch gekennzeichnet, daß** die Vermittlungsstelle mit zweiten Mittele (CONTR1) zur Ermittlung derjenigen von zwei oder mehr Nebenstellenvermittlungen des Teilnehmeranschlußnetzes aus einer Verbindungsanforderung mit einer gerufenen öffentlichen Rufnummer versehen ist, in deren privatem Nummerierungsbereich die gerufene öffentliche Rufnummer als Nebenstellenrufnummer einem Endgerät zugeordnet ist, und daß die Vermittlungsstelle mit dritten Mitteln (CONTR2) zum Eintragen einer virtuellen Rufnummer mit einer der ermittelten Nebenstellenvermittlung zugeordneten Nebenstellenkennung und der gerufenen öffentlichen Rufnummer in die Verbindungsanforderung als gerufene Rufnummer versehen ist.

10. Dienststeuereinrichtung (SCP) für ein Teilnehmeranschlußnetz (AN), das dem Anschluß von Endgeräten (TE1 bis TE8) dient, die über das Teilnehmeranschlußnetz (AN) jeweils mittels einer ihnen zugeordneten öffentlichen Rufnummer (CN) eines öffentlichen Nummerierungsbereichs erreichbar sind, wobei die Dienststeuereinrichtung (SCP) mit erste Mittel (KOM) zur Kommunikation mit einer Dienstvermittlungsstelle (SSP) des Teilnehmeranschlußnetzes (AN) versehen ist,
**dadurch gekennzeichnet, daß** die Dienststeuereinrichtung mit zweiten Mitteln (CONTR1) zur Ermittlung derjenigen (PABXC) von zwei oder mehr Nebenstellenvermittlungen (PABX1 bis PABX3) des Teilnehmeranschlußnetzes aus einer Verbindungsanforderung mit einer gerufenen öffentlichen Rufnummer (CN) versehen ist, in deren privatem Nummerierungsbereich die gerufene öffentliche Rufnummer (CN) als Nebenstellenrufnummer einem Endgerät zugeordnet ist, und daß die Dienststeuereinrichtung mit dritten Mitteln (CONTR2) versehen ist, die so ausgestaltet sind, daß sie das Eintragen einer virtuellen Rufnummer (CVN) mit einer der ermittelten Nebenstellenvermittlung zugeordneten Nebenstellenkennung und der gerufenen öffentlichen Rufnummer in die Verbindungsanforderung als gerufene Rufnummer veranlassen.

11. Verfahren zum Aufbau einer Verbindung zu einem Endgerät (TE5) eines Teilnehmeranschlußnetzes (AN), wobei bei dem Verfahren eine an das Endgerät gerichtete Verbindungsanforderung mit einer gerufenen öffentlichen Rufnummer (CN), die der Rufnummer des Endgeräts gemäß einem öffentlichen Nummerierungsbereiches entspricht, zu einer Vermittlungseinheit (SSP, SCP) des Teilnehmeranschlußnetzes (AN) geleitet wird,
**dadurch gekennzeichnet, daß** mittels der gerufenen öffentlichen Rufnummer (CN) von der Vermittlungseinheit (SSP, SCP) diejenige von zwei oder mehr Nebenstellenvermittlungen (PABX1 bis PABX3) des Teilnehmeranschlußnetzes (AN) ermittelt wird, in deren privaten Nummerierungsbereich die erste Rufnummer (CN) als Nebenstellenrufnummer dem Endgerät (TE5) zugeordnet ist, daß von der Vermittlungseinheit (SSP, SCP) aus der gerufenen öffentlichen Rufnummer (CN) und einer der ermittelten Nebenstellenvermittlung (PABX2) zugeordneten Nebenstellenkennung eine gerufene virtuelle Rufnummer (CVN) gebildet und in die Verbindungsanforderung eingetragen wird und daß die Verbindungsanforderung mit der gerufene virtuelle Rufnummer (CVN) zu der bestimmten Nebenstellenvermittlungn (PABX2) geleitet und dadurch der Aufbau der Verbindung veranlaßt wird.

## Claims

1. A subscriber access network (AN) for the connection of terminals (TE1 to TE8) which can be reached through the subscriber access network (AN) by means of respective public numbers assigned to them in a public numbering range, the subscriber access network (AN) comprising a plurality of exchanges (SSP, PABX1 to PABX3) for connecting the terminals (TE1 to TE8) to the subscriber access network (AN),
**characterized in that** two or more of the exchanges (PABX1 to PABX3) are private branch exchanges with respective private numbering ranges and each comprise first means adapted to assign to the terminals connected to the respective private branch exchange their respective public numbers as extension numbers in the respective private numbering range, that the subscriber access network (AN) comprises second means (CONTR1) for determining that of the two or more private branch exchanges from a connection request with a called public number (CN) in whose private numbering range the called public number is assigned to a terminal as an extension number, and that the subscriber access network (AN) comprises third means (CONTR2, SSP) for entering a virtual number (CVN), consisting of a private branch exchange identification assigned to the private branch exchange determined and the called public number, in the connection request as the called number.

2. A subscriber access network as claimed in claim 1, **characterized in that** the subscriber access network comprises fourth means adapted to remove the private branch exchange identification from a connection request containing a virtual number formed as a calling number from a public number and a private branch exchange identification, and to route the connection request with the public number onward as the calling number.

3. A subscriber access network as claimed in claim 1 or 2, **characterized in that** the second to third means or the second to fourth means, respectively, are located at a specific one of the exchanges of the subscriber access network, and that the specific exchange is connected to the two or more private branch exchanges.

4. A subscriber access network (AN) as claimed in claim 1 or 2, **characterized in that** the second means (CONTR1) are located at a service control point (SCP) of the subscriber access network (AN), that the service control point (SCP) is connected to at least one specific service exchange (SSP) of the subscriber access network, and that said at least one specific service exchange (SSP) is connected to the two or more private branch exchanges (PABX1 to PABX3).

5. A subscriber access network as claimed in claim 4, **characterized in that** the service control point (SCP) and the at least one specific service exchange (SSP) are adapted to communicate with one another according to the IN architecture.

6. A subscriber access network (AN) as claimed in any one of claims 1 to 5, **characterized in that** two or more of the private branch exchanges (PABX1, PABX2) are interconnected and adapted to form a cluster of private branch exchanges which share the same private numbering range.

7. A subscriber access network (AN) as claimed in any one of claims 1 to 6, **characterized in that** all connections between the subscriber access network (AN) and further networks (TN) are routed through the specific exchange or the at least one specific service exchange (SSP).

8. A subscriber access network (AN) as claimed in any one of claims 1 to 7, **characterized in that** the specific exchange or the at least one specific service exchange (SSP) is connected to at least one further exchange of the subscriber access network or of further networks via a No. 7 signaling system, and that the two or more private branch exchanges (PABX1 to PABX3) are connected to the specific exchange or the at least one specific service exchange (SSP) via a DSS1 interface.

9. An exchange for a subscriber access network (AN) for the connection of terminals which can be reached through the subscriber access network by means of respective public numbers assigned to them in a public numbering range,
**characterized in that** the exchange comprises second means (CONTR1) for determining those of two or more private branch exchanges of the subscriber access network from a connection request with a called public number in whose private numbering range the called public number is assigned to a terminal as an extension number, and that the exchange comprises third means (CONTR2) for entering a virtual number, consisting of a private branch exchange identification assigned to the private branch exchange determined and the called public number, in the connection request as a called number.

10. A service control point (SCP) for a subscriber access network (AN) for the connection of terminals (TE1 to TE8) which can be reached through the subscriber access network (AN) by means of respective public numbers (CN) assigned to them in a public numbering range, the service control point (SCP) comprising first means (KOM) for communicating with a service exchange (SSP) of the subscriber access network (AN),
**characterized in that** the service control point comprises second means (CONTR1) for determining that (PABXC) of two or more private branch exchanges (PABX1 to PABX3) of the subscriber access network from a connection request with a called public number (CN) in whose private numbering range the called public number (CN) is assigned to a terminal as an extension number, and that the service control point comprises third means (CONTR2) adapted to initiate the entry of a virtual number (CVN), consisting of a private branch exchange identification assigned to the private branch exchange determined and the called public number, in the connection request as a called number.

11. A method of establishing a connection to a terminal (TE5) of a subscriber access network (AN), the method comprising the step of routing a connection request directed to the terminal and containing a called public number (CN) corresponding to the number of the terminal according to a public numbering range to a switching unit (SSP, SCP) of the subscriber access network (AN),
**characterized in that** by means of the called public number (CN), the switching unit (SSP, SCP) determines that of two or more private branch exchanges (PABX1 to PABX3) of the subscriber access network (AN) in whose private numbering range the called public number (CN) is assigned to the terminal (TE5) as an extension number, that the switching unit (SSP, SCP) forms a called virtual number (CVN) from the called public number (CN) and a private branch exchange identification assigned to the private branch exchange (PABX2) determined, and enters said called virtual number (CVN) in the connection request, and that the connection request with the called virtual number (CVN) is routed to the private branch exchange (PABX2) determined, thereby initiating the establishment of the connection.

## Revendications

1. Réseau local d'abonnés (AN) pour le raccordement de terminaux (TE1 à TE8) qui sont accessibles à l'aide du réseau local d'abonnés (AN) respectivement au moyen d'un numéro d'appel public d'une zone de numérotage publique qui leur est attribué, le réseau local d'abonnés (AN) étant muni de plusieurs centraux téléphoniques (SSP, PABX1 à PABX3) pour le raccordement de terminaux (TE1 à TE8), **caractérisé en ce que** deux ou plusieurs des centraux téléphoniques (PABX1 à PABX3) sont des centraux téléphoniques à postes supplémentaires avec une zone de numérotage privée respective et que ces centraux téléphoniques à postes supplémentaires (PABX1 à PABX3) sont munis respectivement de premiers moyens réalisés de telle sorte qu'ils associent respectivement leur numéro d'appel public aux terminaux raccordés au central téléphonique à postes supplémentaires respectif, comme numéro d'appel de postes supplémentaires dans la zone de numération respective privée, **en ce que** le réseau local d'abonnés (AN) est muni de deuxièmes moyens (CONTR1) pour déterminer lesquels des deux ou plusieurs centraux téléphoniques à postes supplémentaires d'une demande d'appel sont munis d'un numéro d'appel public appelé (CN), dans la zone de numérotage privée desquels le numéro d'appel public appelé est attribué à un terminal comme numéro d'appel de poste supplémentaire, et **en ce que** le réseau local d'abonnés (AN) est muni de troisièmes moyens (CONTR2, SSP) pour entrer un numéro d'appel virtuel (CVN) avec l'un des indicatifs attribué au central téléphonique à postes supplémentaires déterminé, et avec le numéro d'appel public appelé dans la demande d'appel comme numéro d'appel appelé.

2. Réseau local d'abonnés selon la revendication 1, **caractérisé en ce que** le réseau local d'abonnés est muni de quatrièmes moyens réalisés de telle sorte qu'ils suppriment l'indicatif de poste supplémentaire d'une demande d'appel avec un numéro d'appel virtuel comme numéro d'appel appelant, formé par un numéro d'appel public et un indicatif de poste supplémentaire, et acheminent la demande d'appel avec le numéro d'appel public comme numéro d'appel appelant.

3. Réseau local d'abonnés selon la revendication 1 ou la revendication 2, **caractérisé en ce que** les deuxièmes aux troisièmes moyens respectivement les deuxièmes aux quatrièmes moyens sont disposés dans un central téléphonique spécial des centraux téléphoniques du réseau local d'abonnés et que le central téléphonique spécial est raccordé aux deux ou plusieurs centraux téléphoniques à postes supplémentaires.

4. Réseau local d'abonnés (AN) selon la revendication ou la revendication 2, **caractérisé en ce que** les deuxièmes moyens (CONTR1) sont disposés dans un dispositif de commande de service (SCP) du réseau local d'abonnés (AN) , **en ce que** le dispositif de commande de service (SCP) est raccordé à au moins un central spécial de commutation des services (SSP) des centraux téléphoniques du réseau local d'abonné, qui est raccordé aux deux ou plus centraux téléphoniques à postes supplémentaires (PABX1 à PABX3).

5. Réseau local d'abonnés selon la revendication 4, **caractérisé en ce que** le dispositif de commande de service (SCP) et les au moins un central spécial de commutation des services (SSP) sont formés de telle sorte qu'ils communiquent entre eux selon l'architecture IN.

6. Réseau local d'abonnés (AN) selon l'une quelconque des revendications 1 à 5, **caractérisé en ce que** deux ou plus des centraux téléphoniques à postes supplémentaires (PABX1, PABX2) sont raccordés entre eux et réalisés de telle sorte qu'ils forment un cluster de centraux téléphoniques à postes supplémentaires qui se partage une zone de numérotage privée commune.

7. Réseau local d'abonnés (AN) selon l'une quelconque des revendications 1 à 6, **caractérisé en ce que** toutes les communications entre le réseau local d'abonnés (AN) et d'autres réseaux (TN) sont établies à l'aide du central téléphonique spécial ou des au moins un central spécial de commutation des services (SSP) .

8. Réseau local d'abonnés (AN) selon l'une quelconque des revendications 1 à 7, **caractérisé en ce que** le central téléphonique spécial ou les au moins un central spécial de commutation des services (SSP) est raccordé à l'aide d'un système de signalisation n°7 à au moins un autre central téléphonique du réseau local d'abonnés ou d'autres réseaux, et **en ce que** deux ou plusieurs centraux téléphoniques à postes supplémentaires (PABX1 à PABX3) sont raccordés à l'aide d'une interface DSS1 au central téléphonique spécial respectivement aux au moins à un central spécial de commutation des services (SSP).

9. Central téléphonique d'un réseau local d'abonnés (AN), servant à raccorder des terminaux accessibles à l'aide du réseau local d'abonnés respectivement au moyen d'un numéro d'appel public d'une zone de numérotage publique qui leur est attribué, **caractérisée en ce que** le central téléphonique est muni de deuxièmes moyens (CONTR1) pour déterminer lesquels des deux ou plusieurs centraux téléphoniques à postes supplémentaires du réseau local d'abonnés sont munis d'une demande d'appel avec un numéro d'appel public appelé, dans la zone de numérotage privée desquels le numéro d'appel public appelé est attribué à un terminal comme numéro d'appel de poste supplémentaire, et **en ce que** le central téléphonique est muni de troisièmes moyens (CONTR2) pour entrer un numéro d'appel virtuel avec l'un des indicatifs de poste supplémentaire attribué au central téléphonique à postes supplémentaires déterminé, et avec le numéro d'appel public appelé dans la demande d'appel comme numéro d'appel appelé.

10. Dispositif de commande de service (SCP) pour un réseau local d'abonnés (AN) servant à raccorder des terminaux (TE1à TE8) accessibles à l'aide du réseau local d'abonnés (AN) respectivement au moyen d'un numéro d'appel public (CN) d'une zone de numérotage publique qui leur est attribué, le dispositif de commande de service (SCP) étant muni de premiers moyens (KOM) pour communiquer avec un central de commutation des services (SSP) du réseau local d'abonnés (AN), **caractérisé en ce que** le dispositif de commande de service est muni de deuxièmes moyens (CONTR1) pour déterminer lesquels des deux ou plusieurs centraux téléphoniques à postes supplémentaires (PABX1 à PABX3) du réseau local d'abonnés sont munis d'un numéro d'appel public appelé (CN), dans la zone de numérotage privée desquels le numéro d'appel public appelé (CN) est attribué à un terminal comme numéro d'appel de poste supplémentaire, et **en ce que** le dispositif de commande de service est muni de troisièmes moyens (CONTR2) réalisés pour entrer un numéro d'appel virtuel (CVN) avec l'un des indicatifs attribué au central téléphonique à postes supplémentaires déterminé, et avec le numéro d'appel public appelé dans la demande d'appel comme numéro d'appel appelé.

11. Procédé pour établir une communication vers un terminal (TE5) d'un réseau local d'abonnés (AN), une demande d'appel orientée vers le terminal étant acheminée, lors du procédé, avec un numéro d'appel public appelé (CN), correspondant au numéro d'appel du terminal selon une zone de numérotage publique, vers une unité de central téléphonique (SSP, SCP) du réseau local d'abonné, **caractérisé en ce qu'**au moyen du numéro d'appel public appelé (CN) depuis l'unité de central téléphonique (SSP, SCP), on détermine ceux des deux ou plusieurs centraux téléphoniques à postes supplémentaires (PABX1à PABX3) du réseau local d'abonnés (AN) dans la zone de numérotage privée desquels le premier numéro d'appel public (CN) est attribué au terminal (TE5) comme numéro d'appel de poste supplémentaire, **en ce qu'**un numéro d'appel virtuel appelé (CN) est formé par l'unité de central téléphonique (SSP, SCP) à partir du numéro d'appel public appelé (CN) et d'un indicatif attribué au central téléphonique à postes supplémentaires déterminé (PBX2), et entré dans la demande d'appel et **en ce que** la demande d'appel avec le numéro d'appel virtuel appelé (CVN) est acheminé vers le central téléphonique à postes supplémentaires déterminé (PABX2) et qu'ainsi on ordonne l'établissement de la communication.
